# EUROPEAN PATENT APPLICATION

(11) **EP 1 039 190 A2**
(43) Date of publication of application: **27.09.2000**
(21) Application number: 00830210.1
(22) Date of filing: 21.03.2000
(51) Int. Cl.: F16K 27/02

(54) **Valve for fluid distribution networks**

(30) Priority: 22.03.1999 IT BO990132
(71) Applicant: A & G Group S.R.L., 42011 Bagnolo in Piano (RE) (IT)
(72) Inventor: Rimbano, Nazzareno, 45010 Villadose (RO) (IT)
(74) Representative: Lanzoni, Luciano

(57) **Abstract**

A valve (1) for fluid distribution networks has an inlet pipe (2) and an outlet pipe (3) extending along a longitudinal axis (A) and arranged facing each other, and a main body (4), which is located between the end sections (2a,3a) of the pipes (2,3) and supports a regulating device (17,18) for varying the communication aperture between the said pipes; the valve having two assemblies (6,7) for retaining the end sections (2a,3a) of the pipes, which are arranged on opposite sides of the main body (4) with respect to the axis (A); each retaining assembly (6,7) being provided with an annular flange (8) rigidly connected to a first bush (11) which engages externally on the end section (2a,3a) of the said pipe and with a second externally shaped bush (13) which is force-fitted into the end section of the pipe so as to wedge it and constrain it to the first bush (11); the valve having fixing elements (20,21) for fixing together the flanges (8) of the retaining assemblies (6,7) so as to constrain between them the main body (4) in an irremovable manner.

## Description

The present invention relates to a valve for fluid distribution networks.

In distribution networks for pressurised fluids it is usual to connect some sections of the network by installing valves designed to regulate the flow of the fluid at the distribution node.

Some of these valves are flow control valves which connect at least one inlet (or delivery) pipe to at least one outlet (or user) pipe and are designed to regulate the flowrate of the fluid to be conveyed to users of various kinds situated downstream of the distribution node. These valves are generally made of bronze and brass, forged cast steel, cast iron or spheroidal steel. The abovementioned valves have a main body provided with flanges fixed by means of screws to flanges mounted on the pipes.

During the last few years there has been a growing international awareness that water is a valuable and important commodity in that it is available in increasingly smaller quantities. Consequently, the transportation of water must be managed with the maximum efficiency, reducing wastage and losses as well as the often excessive costs for management, ordinary maintenance and extraordinary repair. This goal may be achieved mainly by means of a rigorous and radical re-evaluation of the components which form pressurised networks, in particular the valves which are widely used in these networks. These valves are often chosen on the basis of their purchase price, with little attention being paid to their quality and reliability, namely to those factors which increase the value of an installation, ensure a longer duration thereof and render it more efficient and productive. In view of the increasingly widespread use of plastic pipes for the construction of aqueducts, gas ducts, fire-extinguishing systems and all civil and industrial installations, the confusion which exists with regard to regulations and correct specifications, the absence of product certification procedures and the inaccuracy of norms (often out-of-date and obsolete) has resulted in design and installation engineers using valves with plastic pipes in an inappropriate manner, i.e. in a way which is unsuitable for plastic materials, with major negative consequences in terms of reliability and safety. One merely need consider, for example, that most underground valves are housed in cement wells situated in inaccessible positions and that these valves are connected to the pipes by means of metal flanges fixed together by means of bolts which do not ensure coaxial alignment between the pipes and the valve body and are not always tightened with the same amount of force and which, therefore, tend to cause preliminary fractures in the connection elements and/or the pipe. Attention should also be drawn to the corrosion and rapid ageing of the metal components when they are located in environments which have an adverse effect on them. The present invention aims to provide an effective remedy for the abovementioned deficiencies in the hope that the relevant regulatory bodies are able to produce comprehensive specifications also for the sector of valves intended for plastic pipes.

In the present description below reference shall be made, for the sake of simplicity, to flow control valves with one inlet and one outlet, i.e. having an inlet mouth designed to receive the delivery pipe, an outlet mouth designed to receive the user pipe and a regulating device designed to vary the communication aperture between these pipes.

The connection between each mouth of the main body and the associated pipe must ensure a perfect fluid-tight seal in order to prevent both leakage of fluid outside of the network and infiltration inside the said network which, as is known, is often underground. Moreover, this connection must be particularly resistant to the tensile stress which is produced when the pressurised fluid passes between the pipes in the network. In fact, since the pressure of the fluid is often highly variable, the nodes may be subject to high stresses which may place severe demands on the mechanical strength of the pipes, the valves and their connections.

The object of the present invention is to provide a valve for fluid distribution networks which does not have the abovementioned drawbacks, i.e. can be constructed and assembled at a low cost and with extreme ease.

According to the present invention a valve for fluid distribution networks, of the type described in Claim 1, is provided.

The present invention will now be described with reference to the accompanying drawings which illustrate a preferred non-limiting embodiment thereof, in which:
- Figure 1 shows a longitudinally sectioned view, with parts sectioned and parts removed for the sake of clarity, of a valve provided in accordance with the teachings of the present invention; and
- Figure 2 shows a cross-sectional view, with parts removed for the sake of clarity, of the valve according to Figure 1.

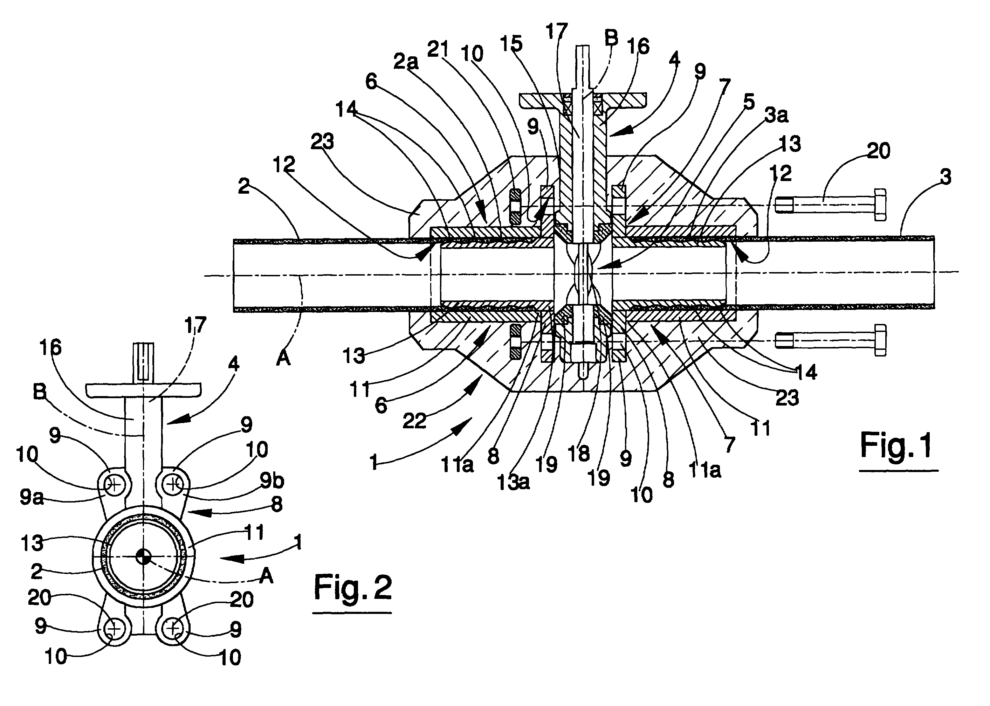

With reference to Figure 1, 1 denotes in its entirety a valve for pressurised-fluid distribution networks and in particular a flow control valve designed to be installed in a distribution node of the network in order to regulate the flowrate of the fluid to be supplied to users located downstream of the said node. The valve 1 also comprises an inlet (or delivery) pipe 2 for the fluid and at least one outlet (or user) pipe 3 for the fluid, which pipes extend and are aligned along the same longitudinal axis A and have respective end sections 2a and 3a arranged facing each other. In particular, the pipes 2 and 3 are made of plastic (preferably polyethylene) and are substantially cylindrical. During use, these pipes 2 and 3 are connected by means of welds to ducts (not shown) along which the pressurised fluid flows.

The valve 1 comprises a main body 4 which is made of metallic material and is located between the end sections 2a and 3a of the pipes 2 and 3 and supports a regulating device 5 designed to regulate the flow of fluid from the inlet pipe 2 towards the outlet pipe 3, i.e. the flowrate of the fluid which passes through the said valve.

The valve 1 also has two assemblies 6 and 7 for retaining the pipes 2 and 3, which are arranged on opposite sides of the main body 4, are separate from the main body 4 and are each designed to retain an end section 2a,3a of a respective pipe 2,3. The retaining assemblies 6,7, moreover, are designed to be rigidly connected to each other so as to constrain the main body 4 between them in an irremovable manner.

In particular, each retaining assembly 6,7 comprises an annular flange 8 which is made of metallic material, is arranged transversely with respect to the axis A, extends around the axis A defining the axis of symmetry thereof and is provided with a plurality of peripheral lugs 9 which extend radially outwards and have a respective through-hole 10.

In the example shown, each flange 8 has four lateral lugs 9 arranged symmetrically around the axis A (Figure 2), and the hole 10 in each lug 9 of a flange 8 is aligned, parallel to the axis A, with the hole 10 in a corresponding lug 9 of the other flange 8.

Moreover, each retaining assembly 6,7 has a respective cylindrical portion 11 which is made of metallic material, is coaxial with the flange 8, has its own end lla rigidly connected to the external surface of the annular flange 8 (example by means of a flush weld) and defines a connection mouth 12 designed to receive, inside it, the end section 2a, 3a of the associated pipe 2,3.

Each retaining assembly 6, 7 also has an additional cylindrical bush 13 which is made of metallic material and has the function of ensuring that the end section 2a,3a of the pipe 2,3 is rigidly connected to the bush 11.

The bush 13 is coaxial with the bush 11, has an external diameter which is slightly greater than the internal diameter of the pipe, is externally shaped so as to have a series of annular projections 14 and is force-fitted inside the end section 2a,3a of the said pipe so as to compress it against the internal surface of the bush 11.

In particular, the bush 13 is arranged with one of its ends 13a situated outside the pipe 2,3 and wedged inside the annular flange 8, while the projections 14 are embedded in the internal surface of the pipe 2,3 so as to ensure a fluid-dynamic seal and good resistance to axial tensile stress.

The main body 4 is located between the flanges 8 of the two retaining assemblies 6 and 7 and is formed so as to have an annular portion 15, which is coaxial with the two flanges 8 and is designed to be constrained between them in an irremovable manner, and an elongated portion 16, which extends along an axis B transverse to the axis A (Figure 2) from the annular portion 15 and is arranged in an intermediate position between two lugs 9a and 9b of the flanges 8.

The regulating device 5 comprises a regulating rod 17 which is mounted in a rotatable and fluid-tight manner inside the main body 4 and houses a member 18 (of the known type) for intercepting the fluid, designed to vary the communication aperture between the inlet pipe 2 and outlet pipe 3 so as to vary the flowrate of the fluid passing through the valve 1.

In particular, the intercepting member 18 is arranged inside the annular portion 15 of the main body 4 and is located between the ends 13a of the two bushes 13. The regulating rod 17 extends outside the main body 4 so as to allow, by means of external operation, adjustment of the position of the intercepting member 18.

Two annular seals 19 are also provided, said seals extending around the axis A, being arranged inside the annular portion 15 and being designed to be arranged against the flanges 8 so as to ensure the seal when the main body 4 is assembled with the retaining assemblies 6 and 7.

The main body 4 is assembled with the two retaining assemblies 6 and 7 by fixing the two annular flanges 8 together using screws-bolts 20 and nuts 21. In the example illustrated, each lug 9 of one of the two flanges 8 is constrained to the corresponding lug 9 of the other flange 8 by inserting a screw-bolt 20 into the holes 10 in the said lugs and using a nut 21 to secure it.

It should be noted that the screw-bolts 20 are arranged laterally with respect to the main body 4 (Figure 2) and that this fixing method allows the annular portion 15 of the main body 4 to be clamped between the flanges 8.

Finally, the valve 1 has a protective structure 22 which is made of plastic, is designed to embed the retaining assemblies 6 and 7 and nearly the whole of the main body 4 in the plastic and has annular portions 23 which externally line the pipes 2 and 3. The structure 22 is designed both to reinforce the seal and the connections between the valve elements and to ensure electrical insulation thereof and, more generally, protection from external agents which could adversely affect correct operation of the valve. Assembly of the valve 1 is performed in an extremely simple manner since, once the pipes 2 and 3 are fixed to the respective retaining assemblies 6 and 7 with the end portions 2a and 3a wedged between the bushes 11 and 13, it is sufficient to insert the main body 4 between the flanges 8 and constrain the said flanges together using the screw-bolts 20.

The operating mode of the valve may be easily deduced and therefore does not require further explanation. The valve described above has certain advantages compared to valves of the known type.

First of all, the valve is transported on-site ready to use and it is merely required to weld the pipes to the network ducts in order for the valve to be able to perform its function. In fact, there is no need to provide wells or fix on-site the valve body to its pipes by means of flanges. This is because the valve is already provided with pipe sections to be connected to the network ducts. It should be pointed out, moreover, that the valve according to the present invention is able to withstand more effectively the mechanical and hydraulic stresses to which it may be subjected as well as attack by chemical agents present in the ground. All of this results, finally, in a considerable saving in terms of costs.

## Claims

1. Valve (1) for fluid distribution networks, comprising at least one inlet pipe (2) and one outlet pipe (3) for the fluid, which have respective end sections (2a,3a) arranged facing each other; a main body (4) located between the said end sections (2a,3a); regulating means (17,18) supported by the said main body (4) for regulating the flow of the fluid between the inlet pipe (2) and the outlet pipe (3); the valve being characterized in that it comprises at least two assemblies (6,7) for retaining the end sections (2a,3a) of the pipes (2,3), which are each designed to retain a respective said pipe (2,3), are arranged on opposite sides of the main body (4) and are separate from the said main body (4); the main body comprising, moreover, fixing means (20,21) for rigidly fixing together the two retaining assemblies (6,7) so as to constrain in an irremovable manner the main body (4) between the said assemblies (6,7).

2. Valve according to Claim 1, characterized in that the said pipes (2,3) are substantially cylindrical and extend along the same longitudinal axis (A) and in that each said retaining assembly (6,7) comprises a respective annular flange (8) extending around the axis (A); the said main body (4) comprising an annular portion (15) which extends around the axis (A) and is designed to be brought into contact against the flanges (8) of the retaining assemblies (6,7) so as to be secured between the said flanges (8) by means of the action of the said fixing means (20,21).

3. Valve according to Claim 2, characterized in that each said retaining assembly (6,7) comprises a first cylindrical bush (11) and a second cylindrical bush (13) coaxial with the annular flanges (8); the first bush (11) being rigidly connected to the flange (8) at one end (11a) thereof so as to receive, inside it, the end section (2a,3a) of the associated pipe (2,3); the second bush (13) having externally a plurality of annular projections (14) and being designed to be force-fitted inside the end section (2a,3a) of the pipe (2,3) so as to wedge the said end section (2a,3a) in contact with the first bush (11) and thus constrain it to the flange (8).

4. Valve according to Claim 2 or 3, characterized in that each said flange (8) has a plurality of peripheral lugs (9) which extend radially outwards and have a respective through-hole (10); the said fixing means (20,21) comprising screw-bolt means (20,21) for rigidly fixing together the flanges (8) of the retaining assemblies (6,7).

5. Valve according to Claim 4, characterized in that the through-hole (10) in each lug (9) of a flange (8) is aligned, parallel to the axis (A), with a through-hole (10) in a corresponding lug (9) of the other flange (8); the fixing means (20,21) comprising, for each pair of aligned through-holes (10), a screw-bolt (20) designed to pass through both the holes (10) and a fixing nut (21).

6. Valve according to Claim 4 or 5, characterized in that the main body (4) comprises an elongated portion (16) extending transversely with respect to the said axis (A) from the said annular portion (15); the screw-bolt means (20) designed to fix the two flanges (8) being arranged laterally with respect to the elongated portion (16) of the main body (4).

7. Valve according to any one of Claims 2 to 6, characterized in that the said regulating device (5) comprises a regulating rod (17), which is mounted in a rotatable and fluid-tight manner inside the main body (4) and extends outside it, and a fluid intercepting member (18) movable with the regulating rod so as to vary the communication aperture between the inlet pipe (2) and the outlet pipe (3); the said intercepting member (18) being arranged inside the annular portion (15) of the main body (4).

8. Valve according to Claim 7, characterized in that the said main body (4) supports two annular seals (19) which are coaxial with the said flanges (8), are arranged inside the annular portion (15) of the main body (4) and are designed to be each brought into contact against a respective said flange (8) so as to ensure the seal.

9. Valve according to any one of the preceding claims, characterized in that it comprises a protective structure (22) which is made of plastic and which covers and embeds the said retaining assemblies (6,7) and nearly the whole of the main body (4) and externally lines the said inlet pipe (2) and the said outlet pipe (3).
